# EUROPEAN PATENT APPLICATION

(11) **EP 0 872 997 A1**
(43) Date of publication of application: **21.10.1998**
(21) Application number: 97302532.3
(22) Date of filing: 14.04.1997
(51) Int. Cl.: H04M 3/42, H04L 29/06

(54) **Communication program interface**

(71) Applicant: HARRIS CORPORATION, Melbourne, Florida 32919 (US)
(72) Inventor: Bailis, Jason Mansfield, Novato, California 94945 (US); Lacker, Virginia Ellen, Petaluma, California 95952 (US); Svetz, Terry Gregory, Kenwood, California 95452 (US); Henel, John Bradford, Richmond, California 94805 (US)
(74) Representative: van Berlyn, Ronald Gilbert

(57) **Abstract**

A communication system among a plurality of communicating devices with an interface comprising a list of features for enhancing the ability of devices to communicate is copied from a device controlling communication to the controlled communication devices. The interface is a variable portion of a communication protocol that, together with a static portion of the protocol provided separately, defines the communication capability of the devices. Applications for telephone systems in a public or private telephone exchange and the controlled devices are computer operated telephones. The display screen of the computer at each telephone is used to select features of the interface.

## Description

The present invention is directed to communication program interface among plural devices under control of a controlling device, in which a telephone communication protocol enhances communication capabilities to a controller and selectively to communication devices.

In communication systems a controller (also referred to as a server) controls communication among plural communication devices (also referred to as clients, workstations, users, device drivers, service providers), the format for communicating is a protocol that enables the devices to talk the same "language", and is typically a software package that is installed at the controller and at the communication devices. The controller may use the protocol to direct communications among the devices and the devices may use the protocol to understand what is being communicated.

In a telephone system the controller may be a public or private telephone exchange and the communication devices may be telephones. When a telephone is connected to the exchange, the telephone asks the exchange to provide a protocol. The exchange sends the protocol, typically a program, to the telephone where it is stored. When the protocol is updated at the exchange, the exchange provides the new protocol to the telephones. For example, if a new feature becomes available in the protocol (e.g., a "hold" button is activated), the updated protocol is provided to the telephones where it will be implemented if the telephone has been authorized to receive the new feature.

Telephone systems may also be integrated with computers by using computer/telephone integration (CTI) devices that enable operation of a telephone through a computer. One of the functions of CTI devices is to provide the communication protocol from the telephone to computer. Where one exchange is providing protocols to a number of computers each of the computers must have capability to receive and process the protocol, and it would be desirable to reduce the need for this much of this capability in the computers (i.e., making the telephone and computer "dumber").

An object of the present invention is to provide a system of enhancing communication in which a communication protocol that includes only a table of enhancement features is provided from a controller to communication devices so that the devices may select which of the features are to be implemented for the device by the controller, and to provide a method of controlling the degree of communication compatibility of two devices that share a fixed interface for minimal communications capability in which a variable interface with a table of communication enhancement features is provided to communication devices for selection.

The present invention includes a telecommunication system among a plurality of communicating devices with an interface comprising a list of features for enhancing the ability of devices to communicate is copied from a device controlling communication to the controlled communication devices. The interface is a variable portion of a communication protocol that, together with a static portion of the protocol provided separately, defines the communication capability of the devices. Applications for telephone systems in a public or private telephone exchange and the controlled devices are computer operated telephones. The display screen of the computer at each telephone is used to select features of the interface.

The invention also includes a telecommunication system for controlling the degree of communication compatibility of two devices sharing a static interface, characterized by establishing communication between two devices by way of a shared static interface at a controlling device, transmitting to a controlled one of the two devices from the controlling device a variable interface with a table of communication features; and selectively providing the features of the variable interface at the controlled one of the two device from the controlling device, so that the selected features of the variable interface together with the static interface determines the degree of communication compatibility of the two devices.

The invention will now be described by way of example, with reference to the accompanying drawings in which;

Figure 1 is a block diagram of an embodiment of the present invention.

Figure 2 is a block diagram of a further embodiment of the present invention in a telephone system environment.

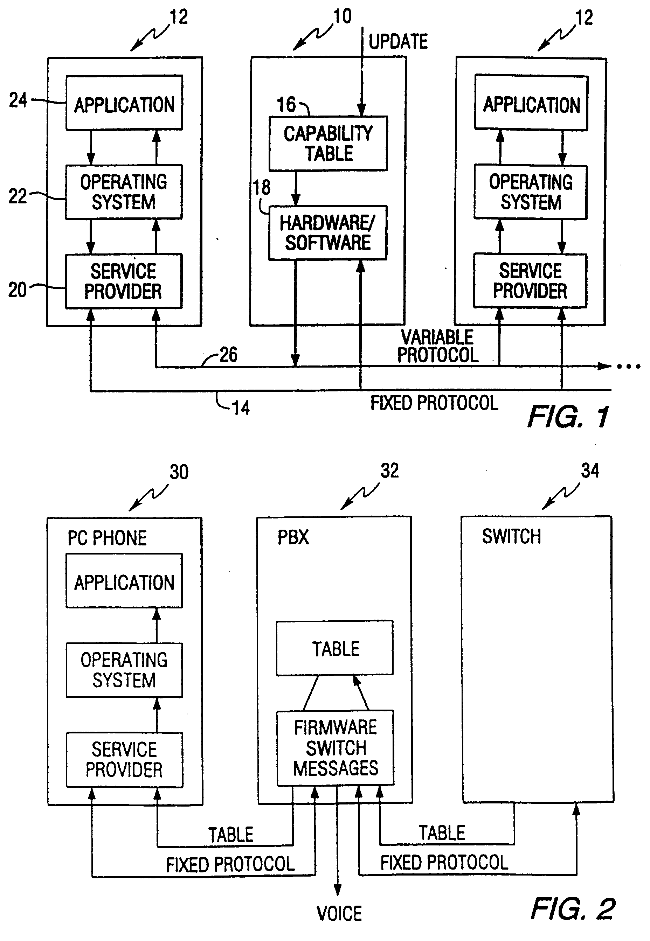

Figure 1 shows an embodiment that includes a controller 10 connected to one or more communication devices 12. The communication among the devices 12 and with the controller 10 may be provided through connection 14 and controlled by a static interface that may be a fixed portion of a communication protocol for enabling a minimal level of communication. This may include the portion of a protocol needed to provide a minimal ability to exchange information (e.g., talk, send facsimiles) that does not change, or that changes infrequently. The controller may have installed therein a protocol table 16 that identifies features of a variable portion of the communication protocol for enhancing the communication capabilities beyond those provided by the static interface, and software and/or hardware 18 needed for implementing the features identified in table 16. The features identified in table 16 may change, new features may be added and existing features may be deleted when the table 16 is updated. The table 16 may be updated as frequently as needed to ensure that the table accurately reflects communication features available.

Each communication device 12 may include a variety of components and those shown in Figure 1 are illustrative. For example, a device 12 may have a service provider 20 for an operating system 22 and application (or end user) 24. One or more may be a computer with the ability to store protocol information provided from the controller 10 to enable communication with the controller 10 and other devices 12. Each device 12 communicates at a minimal level of capability using the static interface through connection 14.

The table 16 lists the enhanced features available in the variable portion of the protocol and a copy of the table is provided through connection 26 to the each communication device 12 for storage in one or more of the components thereof. The table 16 may be provided to each device whenever the table is updated or periodically.

In operation, whenever a feature identified in table 16 is to be exercised by a communication device 12, one of its components selects the feature from the table and sends the tabulated entry to the controller 10 where the selected feature is implemented. For example, if a communication device 12 wants to "hold" communication (and assuming that this feature is available in the table 16), it may select the "hold" feature from its copy of the table 16 and tell the controller of its selection. The controller 10, through its software 18 takes the steps needed to place the device 12 on "hold". The device 12 does not need to know about the steps being taken to implement the selected feature, and thus can be quite "dumb". As the table 16 is updated and copies provided to the devices 12, only the software 18 in the controller 10 has to be changed to reflect changes to implementation steps. The devices 12 can be stable (except for the changes to their copies of the table 16) and yet keep up with the latest protocol changes. The term DNA, for "Dynamic Negotiated API (application program interface)" has been applied to this procedure.

Features of the variable protocol in the devices 12 may be selected and assigned to commands at the computer. For example, a "mute" feature of the variable protocol may selected at a device 12 by calling up a screen on the computer display which enables assignment of the "mute" feature to a key or series of keys (e.g., by assigning a hexadecimal byte identifier to the feature). The screen may include a description of the feature to assist in the selection. When a user activates the command, the identifier is sent to the controller for implementation of "mute" at the device 12.

The DNA procedure may find application in many types of communication systems in which there is a controller and controlled devices, such as computers and printers, computers and public or private telephone exchanges, cellular phones or pagers and base stations, workstations and voice, and other client/server relationships.

In a further embodiment a communication device 12 can query the controller 10 to determine availability of features. The controller 10 may respond with bit fields of its features, and may also provide variable length ASCII text strings, entire "Help" files, or other appropriate explanatory information to assist the user at device 12.

A telephone system environment illustrated in Figure 2, includes a computer operated telephone 30, such as that known by the Registered Trademark HARRIS® PC Phone, and a private exchange 32, such that known in the trade as HARRIS 20-20® PBX, connected to a telephone system switch 34 that provides a connection to an external telephone system and portions of the communication protocol. The fixed protocols connecting the exchange 32 to the switch 34 and computer telephone 30 may be same or different, and may be conventional such as the industry standard BRI protocol. In operation, when a new DNA table is loaded into the PBX, new function codes are copied to the computer telephone 30. Using a display, such as through a WINDOWS® environment, the user can view the new functions and pick a new key for commanding a new function. In use, pressing the key accesses the object code control word for the function and transmits it to the PBX. The PBX would respond by performing the selected function.

A communication system among a plurality of communicating devices with an interface comprising a list of features for enhancing the ability of devices to communicate is copied from a device controlling communication to the controlled communication devices. The interface is a variable portion of a communication protocol that, together with a static portion of the protocol provided separately, defines the communication capability of the devices. Applications for telephone systems in a public or private telephone exchange and the controlled devices are computer operated telephones. The display screen of the computer at each telephone is used to select features of the interface.

## Claims

1. A telecommunication system for communication among a plurality of communicating devices comprising the steps of providing from a first device to a second device an interface comprising a list of features with the ability of the first and second devices to communicate, in which one of the enhancement features to the second device from the first device when selected by the second device, has the step of providing the first and second devices with a fixed protocol and the interface is a variable protocol, in which the step of updating the variable protocol at the first device, selectively updating the variable protocol at the second device when communication is established between the first device and the second device, in which the variable protocol is a table of selectable communication capabilities.

2. A system as claimed in claim 1 wherein the first device is one of a public or private telephone exchange, and the second device is a telephone connected to a computer, adapted to selectively display features of the updated variable protocol on a display at the computer.

3. A system as claimed in claim 1 or 2 including the step of updating the interface at the first device to provide further communication enhancement features, so that the enhancement features of the interface that were selected for the second device do not have to be re-selected in the second device.

4. A telecommunication system for controlling the degree of communication compatibility of two devices sharing a static interface, characterized by establishing communication between two devices by way of a shared static interface at a controlling device, transmitting to a controlled one of the two devices from the controlling device a variable interface with a table of communication features; and selectively providing the features of the variable interface at the controlled one of the two device from the controlling device, so that the selected features of the variable interface together with the static interface determines the degree of communication compatibility of the two devices.

5. A system as claimed in claim 4 characterized by the step of updating the variable interface at the controlling device, and selectively updating the variable interface at the controlled one of the two devices when communication is established between the controlling device and the controlled one of the two devices.

6. A system as claimed in claim 1 or 4 characterized by communicating by way of a controller that uses a communication protocol with a fixed portion that provides minimal communication capability and with a variable portion that enhances the minimal communication capability, by the steps of providing the fixed protocol to a communication device and to the controller, providing the variable protocol listing communications features to the controller, establishing communication between the controller and the communication device using the fixed protocol, transmitting the variable protocol from the controller to the communication device when communication is established therebetween, and selectively providing to the communication device features of the variable protocol from the controller, so that the communication capability between the communication device and the controller is enhanced.

7. A system as claimed in claim 6 characterized by updating the variable protocol at the controller, selectively providing new features of the updated variable protocol at the communication device, in which the variable protocol comprises a table of selectable communication capabilities, and the controller is one of a public or private telephone exchange and the communication device is a telephone connected to a computer, displaying updated variable protocol features on a display at the computer to facilitate selection thereof, or the features of the variable protocol that were selected for the communication device do not have to be re-selected when the variable protocol is updated.
